Europäisches Patentamt

European Patent Office

Office européen des brevets

(11) Publication number: **0 147 451**

**B1**

(12) **EUROPEAN PATENT SPECIFICATION**

(45) Date of publication of patent specification: **03.05.89**

(21) Application number: **84902492.2**

(22) Date of filing: **15.06.84**

(86) International application number:
**PCT/US84/00927**

(87) International publication number:
**WO 85/00030 03.01.85 Gazette 85/01**

(51) Int. Cl.⁴: **B 64 D 17/38**

(54) **RELEASE MECHANISM.**

(30) Priority: **15.06.83 US 504381**

(43) Date of publication of application:
**10.07.85 Bulletin 85/28**

(45) Publication of the grant of the patent:
**03.05.89 Bulletin 89/18**

(84) Designated Contracting States:
**AT BE CH DE FR GB LI LU NL SE**

(56) References cited:
**FR-A- 532 950**
**GB-A- 2 066 346**
**NL-A- 282 767**
**US-A- 3 561 706**
**US-A- 3 744 103**

(73) Proprietor: **JESWINE, William W.**
**8500 Perimeter Road South**
**Seattle, Washington 98108 (US)**

(72) Inventor: **JESWINE, William W.**
**8500 Perimeter Road South**
**Seattle, Washington 98108 (US)**

(74) Representative: **Patentanwälte Grünecker,**
**Kinkeldey, Stockmair & Partner**
**Maximilianstrasse 58**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# Description

The invention relates to a release mechanism according to the preamble part of claim 1.

In a release mechanism known from US—A— 4 428 102 each pivot member consists of two branches, each of which terminating in a rigid steel paddle. The paddles of one pivot member are folded inwardly towards the separation line between the branches. The paddles of the other pivot member are folded outwardly. The paddles are then secured together. Latching means, consisting of two panels, are hingedly mounted on the outer side of one of the pivot members near its line of separation. A securement loop on one panel penetrates eyelets of the bifurcated straps of the other pivot member and an eyelet in the other panel. A release cable extends through the loop and into a pocket on the outside of one of the panels. For quick release under tension the inner paddles first have to be lifted away from the chest of the parachutist in order that the outer panel can swing away for unfolding and releasing. However, the edges of the paddle engage panel with a short lever arm near the hinge of the panel. The pulling resistance of the securement loop through the eyelets and any contact between the ropes or straps of the harness and said panel hinder the paddle to rapidly release said panel. Furthermore, the unfolding steps for the release take place with considerable disturbing friction forces between the paddles and may produce a painful jerk for the parachutist when releasing under tension. Such excessive forces furthermore can bend or distort one of the paddles so that the release mechanism cannot later be used safely. Finally, it is complicated to again assemble and intertwine the release mechanism components after the release mechanism has once been released.

It is the object of the invention to improve a release mechanism according to the preamble part of claim 1 in order to simplify its design, to improve its security while in operation, and to simplify its handling properties.

This object is achieved with the features as contained in the characterizing clause of claim 1. The sole root member forms the only support for both pivot members. The locking forces act upon cooperating surfaces of the rigid pivot members and the root member only. The flexible straps connected to the root member and the pivot members, respectively underlie no excessive wear when the release mechanism is locked and under tension. The release mechanism consists of a few single parts, is light in weight and simple to handle. Its security is enhanced because the securement means directly act on the pivot members in order to release the mechanism as quickly as possible and with a very low actuation force.

Advantageous embodiments of the release mechanism are contained in depending claims 2 to 27.

Embodiments of the invention will be described in connection with the drawings. In the drawings is

Figure 1 a strap release mechanism of a parachute harness,

Figure 2 a perspective view of a preferred embodiment of the strap release mechanism—assembled—,

Figure 3 the strap release mechanism—released and separated—,

Figure 4 a cross-section view along the line 4—4 in Figure 2,

Figure 5 a perspective view of a second embodiment of the strap release mechanism,

Figure 6 the strap release mechanism of Figure 5—released and separated—,

Figure 7 a top plan view of a third embodiment—released and separated—,

Figure 8 a longitudinal section view along line 8—8 in Figure 7—engaged—,

Figure 9 a longitudinal section view of a fourth embodiment of the strap release mechanism,

Figure 10 a perspective view of a fifth embodiment,

Figure 11 a perspective view of a tug and barge illustrating the environment of a cable release mechanism,

Figure 12 a perspective view of the cable release mechanism of Fig. 11,

Figure 13 a transverse section view taken along line 13—13 in Figure 12,

Figure 14 a side elevation view of the cable release mechanism — partially disengaged —,

Figure 15 an enlarged section view of a detail,

Figure 16 a partial side elevation view of a further detail,

Figure 17 a longitudinal section view of a further detail,

Figure 18 a side elevation view of a rope release mechanism, and

Figure 19 a transverse section view along line 19—19 in Figure 18.

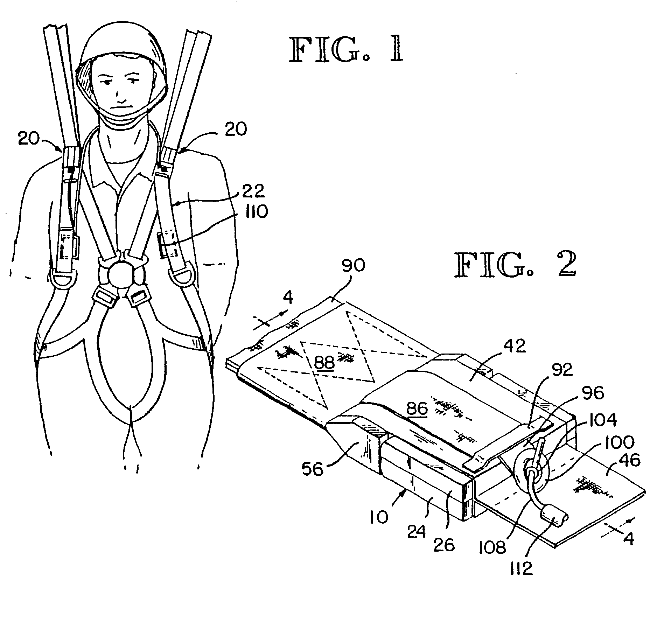

As illustrated in Figure 1, a release mechanism 20 may be utilized to disconnect straps of a parachute harness 22 so that the use may quickly shed the parachute canopy when necessary. The release mechanism 20 could be used at other points in the parachute assembly and in other applications than those illustrated.

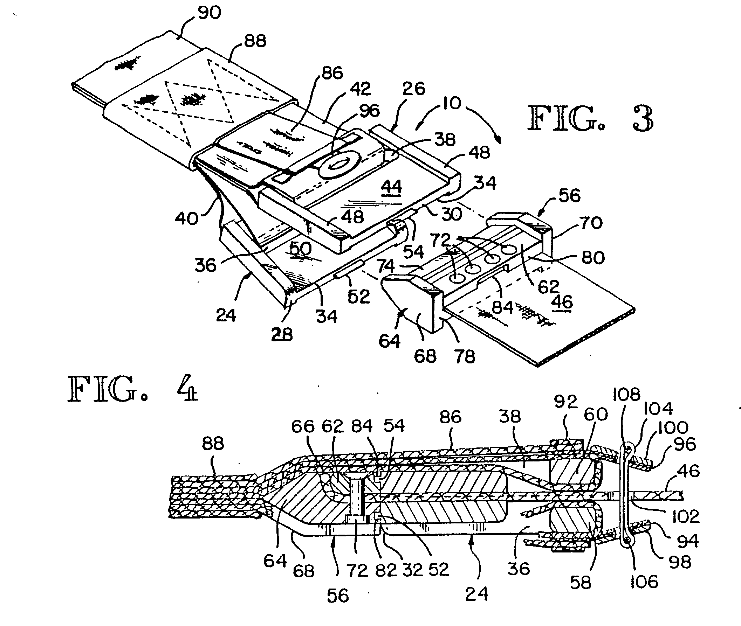

The release mechanism 20 includes a pair of rigid pivot members 24 and 26 (Figure 2) which are, when engaged substantially parallel to each other. They have an elongated pivot edge 28 and 30, respectively, which (Figure 4) are substantially planar along their inner edge and curved away from the opposite contacting surface along the outer edge at 32 and 34. The walls of the pivot members 24, 26 have slots 36 and 38 passing through. These slots receive strap sections 40 and 42, respectively. Each member is provided with a channel 44 on its interior surface. The channels provide a passage through which strap 46 passes. The lateral edges 48 contact each other in engaged position (Figure 2). The exterior surfaces of the members also have channels 50 (Figure 3) which receive the strap to which the member is connected when the release mechanism 20 is in its engaged position (Figure 2). Projections 52 and 54 extend from the interior portion of the pivot edges of the members. They are received within mating slots on a root member 56. The projections serve to index the members relative to the root member and prevent undesirable, relative sliding movement.

In order to accommodate the thickness of the straps 40, 42 passing around connection bars 58, 60, formed above slots 36 and 38, as well as the thickness of the strap 46, the channels on the exterior of the members are deeper in the area of the connection bars (Figure 4). Preferably, the members have a generally rectangular plate-like configuration.

Mating with the pivot edges 28 and 30 is said rigid root member 56 (Figure 4). It is made of two metal components 62 and 64, which, when placed together, form a channel which receives and captively secures the end of strap 46. The channel has a flared opening 66. Component 62 is laterally confined within the sidewalls 68 and 70 of component 64. Rivets 72 secure the components 62 and 64 together. The stems of the rivets pass through the strap to further ensure its securement.

Sidewalls 68 and 70 (Figure 3) extend above a central channel (74) on either side of the root member. The surfaces of the root member 56 are shaped so that the root has a wedge-shaped cross section on the side opposite strap 46. (Figure 4). The length of the straps 40, 42 and the sizes of the pivot and root members are coordinated so that the release mechanism 20 in its assembled configuration, (Figure 4), closely receives bifurcated straps 40, 42. Root member 56 has elongated planar contact surface sections 78 and 80, on either side of strap 46. Slots 82 and 84 are positioned in the surfaces sections on either side of the strap to receive projections 52 and 54.

To assemble the release mechanism 20, the root member 56 is placed centrally between the bifurcated straps 40 and 42. The free ends of members 24 and 26 are then pivoted inwardly on either side of the root member and strap 46. The projections 52 and 54 engage the slots 82, 84. The ends of the members in which the bars 56 and 60 are located are then pivoted together. In this position, the release mechanism 20 will handle tensile forces applied to the straps.

For encouraging the pivot members 24, 26 to rotate from their contacting positions an elastic strip 86 is connected to straps 40, 42. Each strip 86 has its ends secured in a predetermined manner such as by securing one end under a reinforcing band 88 at the base of the bifurcation on strap 90 and securing the other end to strap 46 with securement strip 92. In the assembled configuration (Figure 2), the elastic strip 86 urges members 24, 26 apart.

Tabs 94, 96 are secured to straps 40, 42 near their ends. Grommets 98, 100 are placed in the end of the tabs 94, 96 and provide apertures. An opening 102 is provided in strap 46. A flexible link 104 having openings in either end extends through the opening 102 with either end passing through the grommets 98, 100. Ends of cables 106, 108, extend through the openings in the ends of link 104. Until the ends of one or both of the cables are withdrawn from the link, the members are prevented from pivoting outward. The cables are actuated by pulling a ring 110, which causes the cable to move through a tubular housing 112.

When pulling one or both of the cables 106, 108, the pivot members 24 and 26 are caused to pivot away from each other by the elastic strips or tension loading on the straps 46 and 90, or both. The curved outer edges 32, 34 permit smooth outward pivoting of the members 24, 26. If one member pivots first, the unbalanced loading will cause the opposite member to rapidly begin to pivot also. Once the pivoting action is started, any tension on straps 46 and 90 tends to increase the speed of separation. As the plates' surfaces rotate, the projections 52, 54 are withdrawn from the slots of root member 56. The flexibility of the straps 40 and 42 in their loose connection to the members opposite the contacting surfaces permits the members to pivot easily.

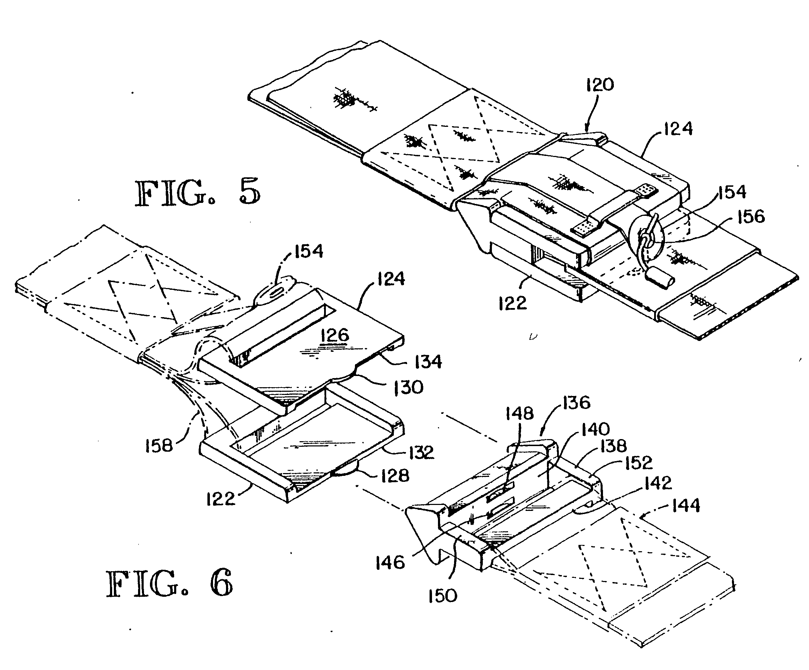

A second embodiment of the release mechanism 120 (Figures 5 and 6) has a pair of pivot members 122 and 124 of rigid metal. Their interior surfaces 126 are flat. The indexing mechanism for connecting the members to root member 136 includes tabs 128 and 130 with rounded end surfaces. They are positioned along the interior edge of engaging end surfaces 132, 134. Root member 136 has a projection 138 located centrally above the contacting surface. The projection holds a transverse connection bar 142 to which strap 144 is connected, such as by looping around the bar. The contact surface has two slots 146 and 148 for the tabs 128, 130. When assembled (Figure 5) the lateral edges of interior surfaces 126 of the members rest against outer surfaces 150, 152 of the projections. The projection thus holds both members in a spaced, substantially parallel relationship to each other. The securing mechanism which holds the members together has only a single grommet 154 on one side of the release mechanism 120. A flexible link 156 has its opposite end fastened to strap 158, which is connected to member 122.

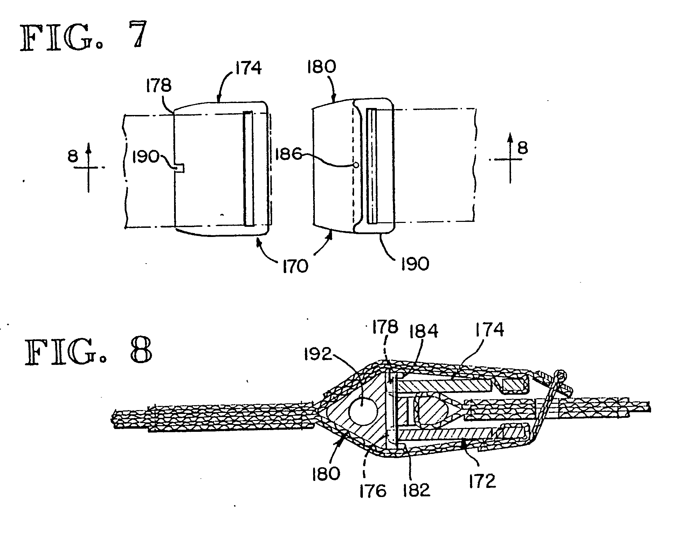

In a third embodiment of a strap release mechanism 170 (Figures 7 and 8) the pivot members 172, 174 are flat on both surfaces. Their contacting edges 176, 178 are rounded (Figure 8). A root member 180 has a pair of grooves 182 and 184 which receive said curved edges 176, 178. For indexing a pin 186 is press-fit in a passage extending through root member 180. The pin 186 is located such that it intersects grooves 182, 184. Notches 190 are provided along the contacting edges of the members and straddle pin 186.

Alternatively the ends of the grooves 182, 184 could be closed. In order to reduce weight a transverse weight reduction hole 192 is provided in root member 180.

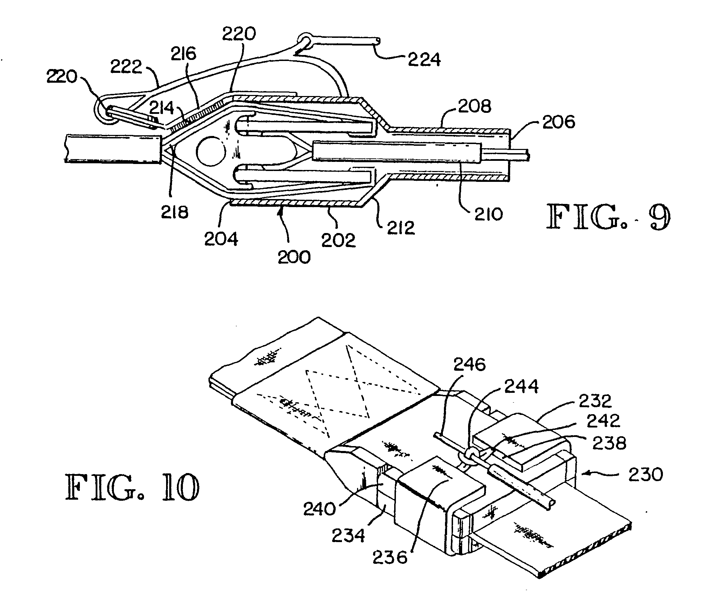

In a fourth embodiment of a strap release mechanism 200 (Figure 9) a sliding enclosure 202 is utilized to keep the members together until it is desired to allow the straps to disconnect. The enclosure is preferably of metal, but other materials may be utilized. The enclosure completely surrounds the releaase mechanism and is provided with openings 204, 206 at either end. Opening 204 is sized to closely receive the release mechanism assembly and prevent the members from swinging outward. The enclosure is narrowed at the opposite end 208 to closely fit around strap 210 yet permit sliding movement of the enclosure along that strap. The intermediate walls 212 are preferably tapered and contact the upper ends of the pivot members.

To prevent movement of the enclosure from a position preventing pivoting movement of the members, a securement mechanism is provided in the form of a pair of mating strips 214 and 216. Strip 216 is secured to a strap 220, which connects at one end to the enclosure 202 and has a projecting end to which is fastened the grommet 220. Cord 222 has one end secured to the grommet and another end secured to the enclosure. An actuating line 224 is connected centrally to cord 222.

To actuate the release mechanism, line 224 is pulled to separate the mating strips 214 and 216. The enclosure is then slid along strap 210 away from the release mechanism by continued force on line 224. When the opening 204 has cleared the members, they pivot freely outward.

In a fifth embodiment of a strap release mechanism 230 (Figure 10) the pivot member and root assembly shown is similar to that of Fig. 2 but it may work equally well with the assemblies as shown in the other Figs.

The pivot members are captively held together by a transverse strap 232 secured centrally to the bifurcated strap member connect to member 234. The ends 236 and 238 of the strap are releasably secured together after the strap is wrapped about members 234 and 240. The ends of the strap are releasably fastened together. The fastening member may include two flexible links 242 and 244, each connected to an end of the strap. Each of the links has openings in its end. One link passes through the other and then is fastened by rigid sliding cable 246. The cable passes through the opening in the end of link 246. To release the mechanism, the cable is withdrawn, permitting the two ends of the strap to separate.

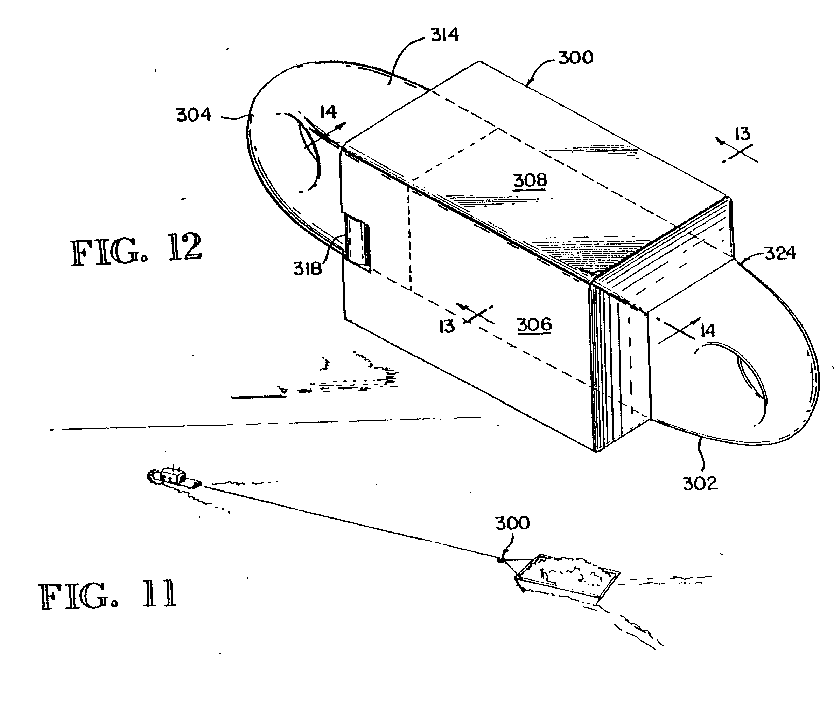

Figures 11 through 15 illustrate release mechanisms for use with cables, ropes and rigid members, such as pipes, tubing, beams, columns and the like. Fig. 11 shows it in connection with a tow cable connecting a tug to a barge. Other applications are possible.

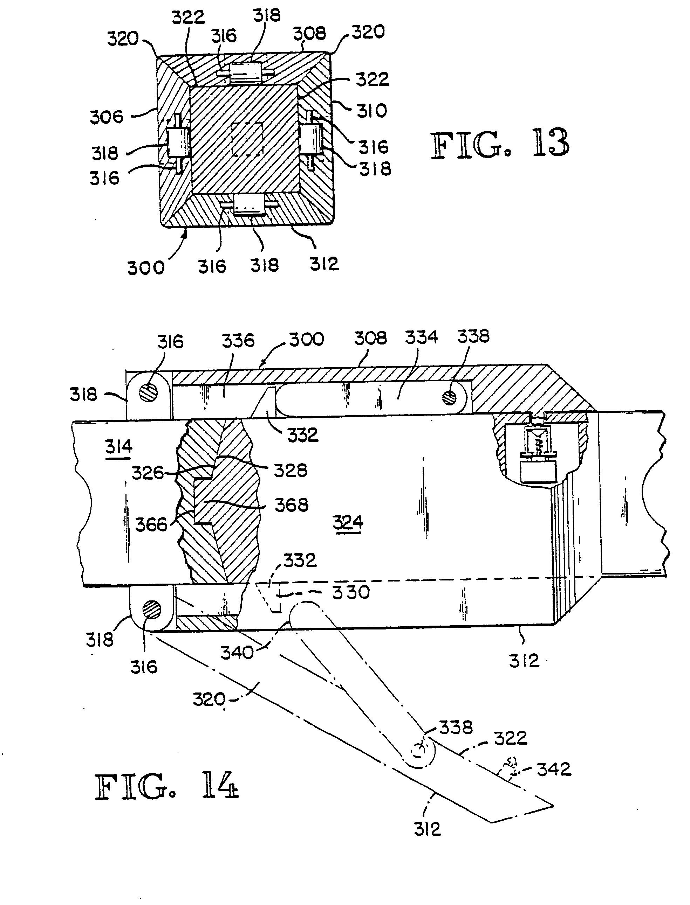

The release mechanism 300 (Figure 12) includes provisions for connecting the members to be joined, such as cable eyes 302, 304. The outside of the release mechanism 300 is. surrounded by a series of rigid leaves 306, 308, 310 and 312, being mounted in an opposing relationship to each other. They are pivotally connected to a common central body 314. The leaves are connected by pivot pins 316 passing through pivot projections 318 of central body 314. The leaves are so mounted that they are able to pivot outward, as illustrated by leaf 312 in Figure 14. The lateral edges of each leaf abut the adjacent leaves on either side and are preferably beveled to form abutting surfaces 320. The shape of the mechanism and the number of leaves may vary.

Inner surfaces 322 of the leaves 306—312 contact the outer walls of a root member 324, connected to cable eyes 302. The contacting relationship between the outer walls of the root member and the inner surfaces of the leaves prevents relative rotation of the release mechanism components. This permits this type of release mechanism to be utilized in connection with beams, columns, pipes, electrical connectors or other structures where additional torsional forces are to be transmitted.

Longitudinal compressive forces may be transmitted by the release mechanism 300 also, since end 326 of the central body abuts end 328 of the root member 324.

In order to transmit tensile forces between the members joined by the release mechanism, engaging surfaces, such as surfaces 330 on projection 332, contact rigid pivoting members, such as pivot member 334, which in turn connect to the leaves.

The leaves are provided with recesses 336, preferably centrally located in each leaf. The pivot members can be mounted such as by pins 338. The ends of the pivot members opposite the pivot pins 338 have engaging surfaces 340 which are preferably curved (Figure 14). These engaging surfaces contact surfaces 330 of the projections 332. Preferably, the engaging surface 330 is planar and normal to the surface of the planar sidewalls of the root.

When the leaves are folded against the walls of the root member, as shown by leaf 308 in Figure 14, the projections 332 extend into the recesses of the corresponding leaves and engage the ends of the pivot members 334. Through pin 338, the forces are transmitted to the leaves. The leaves then transmit the force through pivot pin 316, through central body 314, and to the opposite member to be joined. Forces are transmitted in the opposite direction in a corresponding manner.

The tendency of the leaves to move inward or outward under tension loading is dependent on the relative lateral positioning of the connections of the leaves, such as pin 316, the pivot connection of the pivoting members, such as pins 338, and the point of contact between surfaces 330 and 340. The relationships may be altered so that leaves have a tendency, alternatively, to move inward, to move neither inward nor outward, or to move outward. The choice depends on the application.

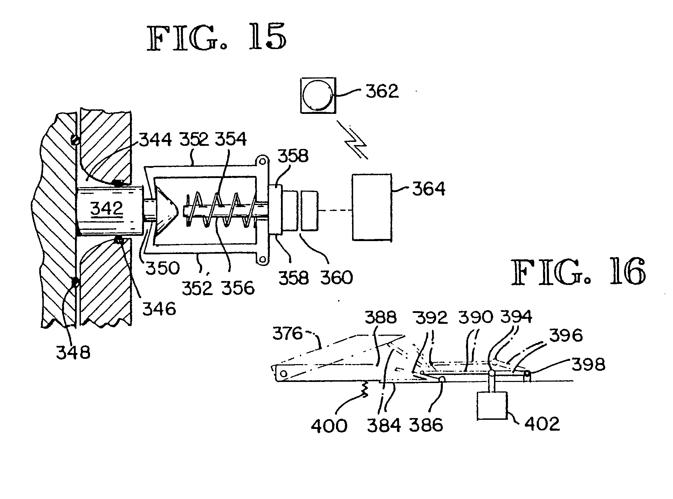

In order to prevent the leaves from moving outward except when desired and to then force them to move outward, a securement mechanism (Figures 14 and 15) is provided. The leaves are provided with projecting tabs 342 received in openings 344 in the wall of root member 324. These openings may be sealed such as through the use of o-rings 346 and 348. The projecting tabs have notches or circumferential grooves 350, which receive the heads of pivoting latching arms 352. Said heads are urged into engagement with the grooves and are maintained there by a biasing mechanism 354. The head of each projection is tapered to urge the heads of the latching arms apart upon the initial entry of the projection thrugh hole 344. In order to release the projection, a push rod 356 having a shoulder 358 is utilized. A mechanism for urging the push rod toward the projection is provided, e.g., the piezo-electric device 360 of Fig. 15. Upon actuation of the piezoelectric device, the shoulder 358 causes the latching arms to pivot away and release the head of the projection while the rod engages the head of the projection, forcing it outward. To remotely actuate the release mechanism, a transmitter 362 can be provided which sends a signal to a receiver/controller 364 which in turn activates the piezoelectric device. The abutting ends of the central body 314 and the root 324 preferably include a rectangular slot 366 and rectangular projection 368, which fits into slot 366.

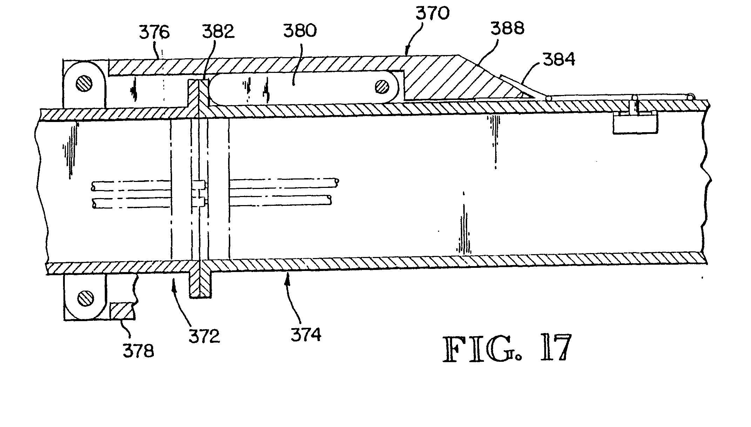

Figures 16 and 17 illustrate an electrical connector release mechanism 370. This release mechanism is utilized with rigid tubular structures, e.g. electrical connector housings 372 and 374. The release mechanism 370 has two or more pivoting leaves 376 and 378 that operate generally as those found in the previous embodiment. The leaves include a recess which receives rigid pivoting members, such as pivot member 380. The projection which engages the end of the pivot member 380 is formed by flange 382 on the end of the connector.

The leaf securement mechanism includes a series of levers. A forked assembly 384 is pivotally connected at hinge 386 to the wall of the connector housing 374. The innermost member fits between the end of the leaf and the housing wall. The outer member is shorter and engages top surface 388 at the end of the leaf. A rigid lever arm 390 is connected at 392 to the forked assembly 384. It is pivotally connected at its opposite end 394 to another lever arm 396. The opposite end of this arm 396 is rigidly secured in a pivot connection 398 to the wall of connector housing 374. When the leaf is swung inward against the connector housing wall, it is prevented by the lever assembly from swinging outward, as urged either by tension placed on the release or by spring 400 shown in Figure 16. The lengths of the members are chosen such that an over-center latch is formed, with the lever connections at 394 of lever 390 being forced inward against the connector wall to create a stable static state. In order to actuate the release mechanism, the end of the lever 394 is forced outward, such as by the use of a solenoid or as a piezoelectric device 402. When the end 394 is forced outward, this causes the forked assembly to rotate upward, releasing the leaf from under the top lever 392 and forcing it upward by the pivoting action of lever 384. The piezoelectric device may be actuated remotely or locally as desired.

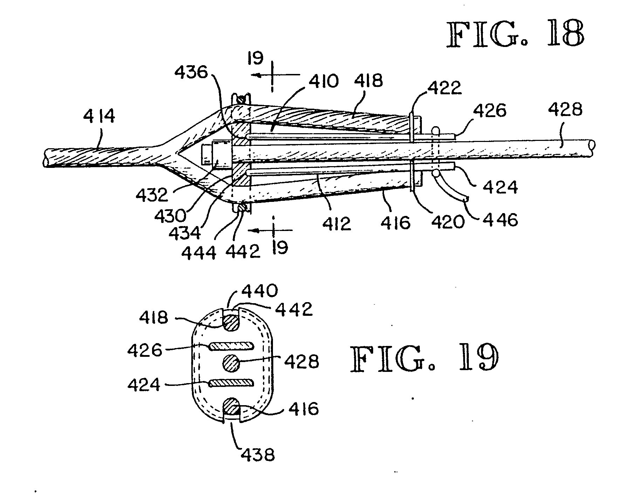

Figures 18 and 19 illustrate a rope release mechanism 410 for connecting ropes, cables and the like. A rope 414 is provided with bifurcated ends 416, 418. The ends are connected by clamps 420, 422 near the ends 424, 426 of the rigid pivot members 412. The pivot members 412 are shown shorter in length than they would preferably be. An opposite rope 428 passes through a transverse root member 430 and is held on the end of the rope by clamp 432. The root member has grooves 434 and 436 which receive the curved ends of pivot members 412 and 410. The ends of the root member are provided with grooves 438 and 440 for receiving the ropes 416 and 418, respectively. An elastic band 442 for holding the ropes within the grooves is provided, which fits in circumferential groove 444 extending around root member. This band keeps the ropes within the grooves when the ropes 414 and 428 are not under tension. In order to hold pivot members in their relationship adjacent rope 428, a releasable securement, such as tie 446, is wrapped about the ends 424 and 426 of the pivot members and the rope 428. To release the mechanism, tie 446 releases to permit the pivot members to pivot outwardly, causing the ends of the members to fall out of the grooves 434 and 436. As they swing outward, the band 442 is forced out of the shallow groove 444. It thus fails to further restrict the outward movement of rope ends 416 and 418. Because of its positioning, the band is captively maintained around rope 414 near the base of the bifurcation.

## Claims

1. A release mechanism (20, 120, 170, 200, 300, 370, 410) for releasably joining two objects (90, 46, 144, 158, 210, 218, 414, 428) as straps, ropes, cables, tubes, pipings, beams, columns or the like, comprising:

a) a first rigid longitudinal pivot member (24, 122, 172, 274, 374, 380, 412) connected with its second end to the first one of said objects and being pivotable about said second end, about a first axis perpendicular to the line connecting the two objects,

b) a second rigid longitudinal pivot member (26, 124, 74, 240, 340) connected with its second end to same one of said objects and being positionable in a substantially parallel relation to and opposite the first pivot member and pivotable about said second end, about a second axis perpendicular to said connecting line.

c) said first and second pivot members having pivot edges (28, 30, 132, 134, 176, 178, 340) at their first ends perpendiclar to said connecting line,

d) said first and second pivot members being pivoted or fold backwardly so that their first ends point towards said first one of said objects when the release mechanism is in its closed position,

e) a root assembly between the first and second pivot members when they are in their substantially parallel relationship with their first ends engaging the root assembly, said root assembly having at least a portion thereof adjacent to the first ends of the pivot members and having at least two engaging portions for supporting the first ends of both pivot members when they are backfold into a substantially parallel relationship, the other of said two objects to be joined being connected to the root member, for transmitting tension forces with the release mechanism,

f) securement means for releasably securing the first and second pivot members in their substantially parallel relationship, and

g) release means for releasably fixing said securement means in the secure position and being movable in a release position, so that upon release of the release means, the first and second pivot members can pivot and disengage from the root assembly to allow separation of the joined objects under tension,

characterized in that said root assembly comprises a rigid root member (56, 136, 180, 324, 374, 430) having at least two engaging surface sections (78, 80, 140, 182, 184, 330, 382, 436, 434) extending transversely to the longitudinal axis of said root member for pivotably supporting the first ends of said first and second pivot members (24, 26, 122, 124, 172, 174, 234, 240, 334, 340, 380, 412), said engaging surface sections being provided on opposite sides of the other one of said objects to be joined, and that the securement means (86, 92, 104, 106, 108, 154, 200, 202, 214, 216, 232, 384, 446) directly cooperate with said pivot members or with elements which are directly connected to the pivot members.

2. A release mechanism, as in claim 1, characterized in that the rigid root member (324, 374) comprises a plurality of flat sides and a front surface (328) for abutting the other object or a member connected to said other object (314, 372), that the root member comprises a plurality of projections (332, 382) each extending outward from a flat side and having said engaging surface sections (330) thereon for the first ends (340) of the pivot members (334, 380) and that a plurality of rigid leaves (306, 308, 310, 312, 370) being pivotally connected to the other object or a member connected to said other object (314, 372), each leaf having a recess (336) therein for pivotally receiving said pivot member (334, 380) so that when the leaves are pivoted to engage the flat sides of the root member with the ends (340) of the pivot members engaging the engaging surface sections (330), the two objects to be joined are prevented from separating.

3. A release mechanism, as in claim 1, characterized in that the root member (430) comprises a transverse plate having a central connection (432) for one (428) of the objects to be joined, surface sections (436, 434) defining a pair of spaced grooves on either side of the central connection for receiving the first ends of the pivot members (412), and that outwardly open grooves (438, 440, 444) being provided in the peripheral edge of said root member (430) wherein the other object (414) being secured with a bifurcated end with flexible lines (416, 418); and that means (442) are provided for resiliently capturing the lines in the grooves (438, 440) at the opposite ends of the root member (430).

4. A release mechanism as in claim 1, characterized in that the surface sections (78, 80; 140) of the root member (56, 136) are substantially planar, and that optionally the pivot edges (28, 30) of the pivot members (24, 26) are convexedly curved.

5. A release mechanism, as in claim 1, characterized in that the pivot members (24, 26, 122, 124) have projecting tabs (52, 54, 128, 130) along their pivot edges (28, 30, 132, 134) and that the surface sections (78; 80; 140) define slots (82, 84; 146, 148) for receivably engaging the tabs to align the pivot members with respect to the root for indexing the surface sections and the pivot edges to prevent transverse movement during mutual engagement.

6. A release mechanism as in claims 1+5, characterized in that the pivot edges of the pivot members define slots and that the surface sections have projections to receivably engage the slots in the pivot members.

7. A release mechanism as in claim 4, characterized in the pivot members (24, 26) comprise plates each have a transverse bar (58, 60) spaced from their pivot edges (28, 30) to provide strap connections for a bifurcated strap- or rope-end.

8. A release mechanism, as in claim 7, characterized in that the pivot members (24, 26) have exterior channels (44) for the strap ends.

9. A release mechanism, as in claim 8, characterized in that the root member (56) has exterior channels (74) for the strap ends.

10. A release mechanism, as in claim 7, characterized in that the first object comprises a section of strap (144) and that the pivot members (122, 124) have a body with lateral margins which extend toward each other to engage the corresponding lateral margins of the opposite pivot member and to define a channel through which the strap section (144) which connects to the root member (136) may pass.

11. A release mechanism, as in claim 1, characterized in that the root member (56) includes a pair of components (62, 64) which define a channel (66) for captively engaging a strap section (46), and that the root member (56) further includes means (72) for securing the pair of components (62, 64) together which passes through the strap section (46) to rigidly secure it to the root member (56).

12. A release mechanism, as in claim 10, characterized in that the root member (136) includes a projection (142) extending above the engaging surface sections (140) and a slot through the projection to form a strap connection bar.

13. A release mechanism, as in claim 1, characterized in that the root member surface sections (184, 182) define concave grooves for receiving the elongated pivot edges of the pivot members (172, 174).

14. A release mechanism, as in claim 1 and 13, characterized in that the root member (180) includes projections (186) extending across the grooves and that the pivot edges of the pivot members (172, 174) each include a section which defines a slot (190) for engaging the projections.

15. A release mechanism, as in claim 7, characterized in that the root member (56, 136) has a wedge-shaped end and sidewalls (68, 70) which define channels on either side of the root member to closely receive the strap ends of the bifurcated strap end.

16. A release mechanism, as in claim 1, characterized in that there are provided means (86) for biasing the pivot members (24, 26) to pivot away from each other and disengage from the root member (56), e.g. rubber straps (86), connected to the pivot members (24, 26) and the strap ends (40, 42).

17. A release mechanism, as in claim 1, characterized in that the securement means (200) comprises a slidable enclosure (202) which closely receives the pivot members when they are in their substantially parallel, root member-engaging position, and that means (216, 214) are provided for preventing sliding movement of the enclosure (202) from the position where it prevents pivoting movement of the pivot members.

18. A release mechanism, is in claim 1, characterized in that the securement means comprises a flexible link connected to the first pivot member (172) opposite its first end and having an opening in the opposite end thereof, a link connected to the second pivot member (174) opposite its first end and having an aperture therein through which the end with the opening of the first link may pass, and that the release means comprises a relatively rigid member which extends through the opening in the first link to prevent its withdrawal through the aperture and to prevent the separation of the pivot members until it is withdrawn.

19. A release mechanism, as in claim 1, characterized in that the securement means comprises links (86) connected to the pivot members (24, 26) opposite their first ends and having apertures therein, that a double-ended link (104) is provided having openings in either end for extending through the apertures, and that a pair of relatively rigid members extend through the openings in the opposite ends of the links.

20. A release mechanism, as in claim 1, characterized in that the securement means comprises a strap (232) securable laterally around the pivot members (234, 240) and means (242, 244, 246) for releasably securing the ends of the strap (232) together.

21. A release mechanism, as in claim 2, characterized in that the leaves (306, 308, 370) completely surround the root member (324, 374) and the end of the abutting member (214, 372) to be joined and each have lateral, optionally beveled, edges (320) which abut the lateral edges (320) of the adjacent leaves to prevent relative rotation of the joined members.

22. A release mechanism, as in claim 21, characterized in that the root member (324) has four walls, each with a projection extending from such wall; that there are provided four leaves (306, 308, 310, 312), each contacting one of the walls; and that there are provided four rigid pivot members (334), each pivotally connected to one of the leaves.

23. A release mechanism, as in claim 2, 21 and 22, characterized in that the walls have surfaces defining openings (344) therein beneath the leaves, that the securement means comprises inwardly projecting tabs (392) on the leaves which extend through the openings (344) and that means are provided for releasably securing the tabs within the openings.

24. A release mechanism, as in claim 23, characterized in that the projecting tabs (342) have surfaces defining notches (352), that a pair of oppositely projecting biased fingers (352) engage the notches (350) in the tab, and that means are provided for disengaging the fingers from the notches to release the leaves and permit disconnection of the joined members.

25. A release mechanism, as in claim 23, characterized in that the securement means comprises means for (356, 360) ejecting the tabs from their secured positions.

26. A release mechanism as in claim 21, characterized in that the securement means comprises a capturing arm (384) pivotally connected to the wall of the root member, that means (390) are provided for moving the capturing arm from a position securing the associated leaf (379) against the wall to a position permitting the leaf to pivot away from the wall to allow the joined members to separate.

27. A release mechanism, as in claim 26, characterized by a leaf ejection device (402) comprising an ejecting arm positionable between the leaf and the wall and connected to the capturing arm movement means (390) for movement therewith so that when capturing arm moves to a position permitting the leaf (376) to pivot away from the wall, the ejection arm forces the associated leaf away from the wall to allow the joined members to separate.

**Patentansprüche**

1. Eine Auslösevorrichtung (20, 120, 170, 200, 300, 370, 410) zum lösbaren Zusammenfügen zweier Gegenstände (90, 46, 144, 158, 210, 218, 414, 428), wie Gurte, Seile, Kabel, Schläuche, Rohre, Träger, Säulen oder dgl., mit:

a) einem ersten starren längsverlaufenden Schwenkelement (24, 122, 172, 274, 374, 380, 412), das mit seinem zweiten Ende mit dem ersten der genannten Gegenstände verbunden und um das genannte zweite Ende um eine zu der die zwei Gegenstände verbindenden Linie senkrechte erste Achse schwenkbar ist,

b) einem zweiten starren längsverlaufenden Schwenkelement (26, 124, 74, 240, 340), das mit seinem zweiten Ende mit demselben der genannten Gegenstände verbunden und in einer im wesentlichen parallelen Stellung relativ zum ersten Schwenkelement und diesem gegenüberliegend anordbar und um das genannte zweite Ende um eine zur genannten Verbindungslinie senkrechte zweite Achse schwenkbar ist,

c) wobei das genannte erste und das genannte zweite Schwenkelement senkrecht zur genannten Verbindungslinie verlaufende Schwenkkanten (28, 30, 132, 134, 176, 178, 340) an ihren ersten Enden aufweisen, und

d) dann, wenn sich die Auslösevorrichtung in ihrer Schließstellung befindet, das genannte erste und das genannte zweite Schwenkelement nach rückwärts verschwenkt oder geklappt sind, so daß ihre ersten Enden auf den genannten ersten der genannten Gegenstände gerichtet sind,

e) einer Kernanordnung zwischen dem ersten und dem zweiten Schwenkelement, wenn sich diese in ihrer im wesentlichen parallelen Stellung relativ zueinander befinden und mit ihren ersten Enden mit der Kernanordnung im Eingriff stehen, wobei die genannte Kernanordnung mit dem anderen der genannten zwei zusammenzufügenden Gegenstände verbunden ist und wenigstens einen, den ersten Enden der Schwenkelemente anliegenden Teil und wenigstens zwei Eingriffsteile zum Abstützen der ersten Ende beider Schwenkelemente, wenn diese in eine im wesentlichen parallele Stellung relativ zueinander zurückgeklappt sind, aufweist, um Zugkräfte mit der Auslösevorrichtung zu übertragen,

f) einer Verschlußeinrichtung zur lösbaren Befestigung des ersten und des zweiten Schwenkelementes in ihrer im wesentlichen parallelen Stellung relativ zueinander, und

g) einer zum lösbaren Sichern der genannten Verschlußeinrichtung in der Schließstellung ausgebildeten Freigabeeinrichtung, die in eine Freigabestellung bewegbar ist, so daß das erste und das zweite Schwenkelement bei Freigabe der Freigabeeinrichtung schwenken und sich von der Kernanordnung lösen können, um die Trennung der zusammengefügten Gegenstände unter Spannung zu ermöglichen,

dadurch gekennzeichnet, daß die genannte Kernanordnung ein starres Kernelement (56, 136, 180, 324, 374, 430) umfaßt, welches wenigstens zwei quer zur Längsachse des genannten Kernelements verlaufende Eingriffsflächenabschnitte (78, 80, 140, 182, 184, 330, 382, 436, 434) zum schwenkbaren Abstützen der ersten Enden des genannten ersten und des genannten zweiten Schwenkelementes (24, 25, 122, 124, 172, 174, 234, 240, 334, 340, 380, 412) aufweist, wobei die genannten Eingriffsflächenabschnitte an gegenüberliegenden Seiten des anderen der genannten zusammenzufügenden Gegenstände vorgesehen sind, und daß die Verschlußeinrichtung (86, 92, 104, 106, 108, 154, 200, 202, 214, 216, 232, 384, 446) direkt mit den genannten Schwenkelementen oder mit Elementen, die direkt mit den Schwenkelementen verbunden sind, zusammenwirken.

2. Eine Auslösevorrichtung nach Anspruch 1, dadurch gekennzeichnet, daß das starre Kernelement (324, 374) eine Mehrzahl von ebenen Seiten und eine Vorderfläche (328) zum Anliegen an den anderen Gegenstand oder ein mit dem genannten anderen Gegenstand (314, 372) verbundenes Element aufweist, daß das Kernelement eine Mehrzahl von Vorsprüngen (332, 382) umfaßt, deren jeder sich von einer ebenen Seite nach außen erstreckt und mit den genannten Eingriffsflächenabschnitten (330) für die ersten Enden (340) der Schwenkelemente (334, 380) versehen ist, und daß eine Mehrzahl von starren Flügeln (306, 308, 310, 312, 370) schwenkbar an den anderen Gegenstand oder ein mit dem genannten anderen Gegenstand (314, 372) verbundenes Element angeschlossen ist, wobei in jedem Flügel eine Aussparung (336) zum schwenkbaren Aufnehmen des genannten Schwenkelementes (334, 380) ausgebildet ist, so daß die Trennung der zwei zusammenzufügenden Gegenstände verhindert wird, wenn die Flügel verschwenkt sind, um mit den ebenen Seiten des Kernelements im Eingriff zu stehen, wobei sich die Enden (340) der Schwenkelemente mit den Eingriffsflächenabschnitten (330) im Eingriff befinden.

3. Eine Auslösevorrichtung nach Anspruch 1, dadurch gekennzeichnet, daß das Kernelement (430) eine Querplatte mit einem zentralen Verbindungsstück (432) für einen (428) der zusammenzufügenden Gegenstände umfaßt, wobei Flächenabschnitte (436, 434) ein Paar beabstandeter Nuten an beiden Seiten des zentralen Verbindungsstücks zur Aufnahme der ersten Ender der Schwenkelemente (412) festlegen, und daß im Umfangsrand des genannten Kernelements (430) nach außen offene Nuten (438, 440, 444) vorgesehen sind, in denen der andere Gegenstand (414) mit einem gegabelten Ende mit flexiblen Strängen (416, 418) festgelegt ist, und daß eine Einrichtung (442) zum elastischen Ergreifen der Stränge in den Nuten (438, 440) an den gegenüberliegenden Enden des Kernelements (430) vorgesehen ist.

4. Eine Auslösevorrichtung nach Anspruch 1, dadurch gekennzeichnet, daß die Flächenabschnitte (78, 80; 140) des Kernelements im wesentlichen ebenflächig sind (56, 136), und daß die Schwenkkanten (28, 30) der Schwenkelemente (24, 26) wahlweise konvex gebogen sind.

5. Eine Auslösevorrichtung nach Anspruch 1, dadurch gekennzeichnet, daß die Schwenkelemente (24, 26, 122, 124) entlang ihren Schwenkkanten (28, 30, 132, 134) vorspringende Zungen (52, 54, 128, 130) aufweisen, und daß die Flächenabschnitte (78, 80; 140) Schlitze (82, 84; 146, 148) für die Eingriffsaufnahme der Zungen begrenzen, um die Schwenkelemente in bezug auf den Kern zur Sperrung der Flächenabschnitte und der Schwenkkanten auszurichten, damit Querbewegungen während des gegenseitigen Eingriffs verhindert werden können.

6. Eine Auslösevorrichtung nach den Ansprüchen 1 und 5, dadurch gekennzeichnet, daß die Schwenkkanten der Schwenkelemente Schlitze begrenzen, und daß die Flächenabschnitte Vorsprünge aufweisen, um in die Schlitze in den Schwenkelementen einnehmend einzugreifen.

7. Eine Auslösevorrichtung nach Anspruch 4, dadurch gekennzeichnet, daß die Schwenkelemente (24, 26) Platten umfassen, deren jede einen mit Abstand von ihren Schwenkkanten (28, 30) angeordneten Querriegel (58, 60) aufweist, der Gurtverbindungen für ein gegabeltes Gurt- oder Seilende bereitstellt.

8. Eine Auslösevorrichtung nach Anspruch 7, dadurch gekennzeichnet, daß die Schwenkelemente (24, 26) äußere Kanäle (44) für die Gurtenden aufweisen.

9. Eine Auslösevorrichtung nach Anspruch 8, dadurch gekennzeichnet, daß das Kernelement (56) äußere Kanäle (74) für die Gurtenden aufweist.

10. Eine Auslösevorrichtung nach Anspruch 7, dadurch gekennzeichnet, daß der erste Gegenstand einen Gurtabschnitt (144) umfaßt, und daß die Schwenkelemente (122, 124) einen Körper mit seitlichen Rändern aufweisen, die aufeinander zu verlaufen, um mit den entsprechenden seitlichen Rändern des gegenüberliegenden Schwenkelements in Eingriff zu gelangen und einen Kanal abzugrenzen, durch den sich der Gurtabschnitt (144), der mit dem Kernelement (136) verbunden ist, hindurcherstrecken kann.

11. Eine Auslösevorrichtung nach Anspruch 1, dadurch gekennzeichnet, daß das Kernelement (56) zwei Teile (62, 64) umfaßt, welche einen Kanal (66) zur Aufnahme eines Gurtabschnitts (46) abgrenzen, und daß das Kernelement (56) ferner eine Einrichtung (72) zur gegenseitigen Befestigung der beiden Teile (62, 64) aufweist, die sich durch den Gurtabschnitt (46) hindurcherstreckt, um diesen unbeweglich am Kernelement (56) zu befestigen.

12. Eine Auslösevorrichtung nach Anspruch 10, dadurch gekennzeichnet, daß das Kernelement (136) einen oberhalb der Eingriffsflächenabschnitte (140) verlaufenden Vorsprung (142) und einen Schlitz durch den Vorsprung zur Bildung eines Gurtverbindungsriegels umfaßt.

13. Eine Auslösevorrichtung nach Anspruch 1, dadurch gekennzeichnet, daß die Flächenabschnitte (184, 182) des Kernelelements konkave Nuten zur Aufnahme der langgestreckten Schwenkkanten der Schwenkelement (172, 174) abgrenzen.

14. Eine Auslösevorrichtung nach Anspruch 1 und 13, dadurch gekennzeichnet, daß das Kernelement (180) Vorsprünge (186) aufweist, die quer über die Nuten verlaufen, und daß die Schwenkkanten der Schwenkelemente (172, 174) je einen Abschnitt umfassen, der einen Schlitz (190) für den Eingriff mit den Vorsprüngen abgrenzt.

15. Eine Auslösevorrichtung nach Anspruch 7, dadurch gekennzeichnet, daß das Kernelement (56, 136) ein keilförmiges Ende und Seitenwandungen (68, 70) umfaßt, die an beiden Seiten des Kernelements Kanäle abgrenzen, die die Gurtenden des gegabelten Gurtendes eng anliegend aufnehmen können.

16. Eine Auslösevorrichtung nach Anspruch 1, dadurch gekennzeichnet, daß Mittel (86) zum Vorspannen der Schwenkelemente (24, 26) vorgesehen sind, um diese voneinander wegzuschwenken und vom Kernelement (56) zu lösen, z.B. Gummibänder (86), die mit den Schwenkelementen (24, 26) und den Gurtenden (40, 42) verbunden sind.

17. Eine Auslösevorrichtung nach Anspruch 1, dadurch gekennzeichnet, daß die Verschlußeinrichtung (200) eine verschiebbare Kapsel (202) umfaßt, die die Schwenkelemente enganliegend aufnimmt, wenn diese sich in ihrer im wesentlichen parallelen Kernelementeingriffs-Stellung befinden, und daß eine Einrichtung (216, 214) vorgesehen ist, um eine Gleitbewegung der Kapsel (202) aus der Stellung heraus zu verhindern, in der sie Schwenkbewegungen der Schwenkelemente unterbindet.

18. Eine Auslösevorrichtung nach Anspruch 1, dadurch gekennzeichnet, daß die Verschlußeinrichtung ein mit dem ersten Schwenkelement (172), gegenüberliegend dessem ersten Ende verbundenes und eine Öffnung in seinem gegenüberliegenden Ende aufweisendes flexibles Glied und ein mit dem zweiten Schwenkelement (174), gegenüberliegend dessem ersten Ende verbundenes Glied mit einer Öffnung darin umfaßt, durch die das die Öffnung aufweisende Ende des ersten Gliedes hindurchgesteckt werden kann, und daß die Freigabeeinrichtung ein relativ starres Element umfaßt, das die Öffnung im ersten Glied durchsetzt, um dessen Entfernung durch die Öffnung hindruch zu verhindern und die Trennung der Schwenkelemente bis zu seiner Entfernung zu verhindern.

19. Eine Auslösevorrichtung nach Anspruch 1, dadurch gekennzeichnet, daß die Verschlußeinrichtung Glieder (86) umfaßt, die mit den Schwenkelementen (24, 26), deren ersten Enden gegenüberliegend, verbunden sind und Löcher aufweisen, und daß ein zwei Enden aufweisendes Glied (104) mit Öffnungen in beiden Enden zum Durchsetzen der Löcher vorgesehen ist, und daß ein Paar relativ starrer Elemente die Öffnungen in den gegenüberliegenden Enden der Glieder durchsetzt.

20. Eine Auslösevorrichtung nach Anspruch 1, dadurch gekennzeichnet, daß die Verschlußeinrichtung ein seitlich um die Schwenkelemente (234, 240) herum befestigbares Band (232) umfaßt sowie eine Einrichtung (242, 244, 246), um die Enden des Bandes (232) lösbar aneinander zu befestigen.

21. Eine Auslösevorrichtung nach Anspruch 2, dadurch gekennzeichnet, daß die Flügel (306, 308, 370) das Kernelement (324, 374) und das Ende des anliegenden, zusammenzufügenden Elements (214, 372) vollständig umgeben und jeder wahlweise abgeschrägte Seitenränder (320) aufweist, die den Seitenrändern (320) der benachbarten Flügel anliegen, um eine relative Drehung der zusammengefügten Elemente zu verhindern.

22. Eine Auslösevorrichtung nach Anspruch 21, dadurch gekennzeichnet, daß das Kernelement (324) vier Wandungen, jede mit einem sich von solch einer Wandung aus erstreckenden Vorsprung, aufweist, daß vier Flügel (306, 308, 310, 312), die je eine der Wandungen berühren, vorgesehen sind, und daß vier starre Schwenkelemente (334), die je schwenkbar mit einem der Flügel verbunden sind, vorgesehen sind.

23. Eine Auslösevorrichtung nach Anspruch 2, 21 und 22, dadurch gekennzeichnet, daß die Wandungen Flächen aufweisen, die Öffnungen (344) darin unterhalb der Flügel begrenzen, daß die Verschlußeinrichtung nach innen vorspringende Zungen (392) an den Flügeln umfaßt, die die Öffnungen (344) durchsetzen, und daß eine Einrichtung zur lösbaren Befestigung der Zungen innerhalb der Öffnungen vorgesehen ist.

24. Eine Auslösevorrichtung nach Anspruch 23, dadurch gekennzeichnet, daß die vorspringenden Zungen (342) Aussparungen (352) begrenzende Flächen aufweisen, daß ein Paar entgegengesetzt vorspringender, vorgespannter Finger (352) in die Aussparungen (350) in den Zungen eingreifen, und daß eine Einrichtung zum Lösen der Finger aus dem Eingriff mit den Aussparungen vorgesehen ist, um die Flügel freizugeben und die Trennung der zusammengefügten Elemente zu ermöglichen.

25. Eine Auslösevorrichtung nach Anspruch 23, dadurch gekennzeichnet, daß die Verschlußeinrichtung Mittel (356, 360) zum Ausstoßen der Zungen aus ihren gesicherten Stellungen aufweist.

26. Eine Auslösevorrichtung nach Anspruch 21, dadurch gekennzeichnet, daß die Verschlußeinrichtung einen Fangarm (384) aufweist, der schwenkbar mit der Wandung des Kernelements verbunden ist, daß eine Einrichtung (390) vorgesehen ist zur Bewegung des Fangarms von einer den zugeordneten Flügel (379) gegen die Wandung festlegenden Stellung in einer Stellung, die das Wegschwenken des Flügels weg von der Wandung ermöglicht, damit die zusammengefügten Elemente getrennt werden können.

27. Eine Auslösevorrichtung nach Anspruch 26, gekennzeichnet durch eine Flügelausstoß-Einrichtung (402) mit einem Ausstoßarm, der zwischen dem Flügel und der Wandung anordbar und mit der Fangarm-Bewegungseinrichtung (390) zur Bewegung mit derselben verbunden ist, so daß dann, wenn der Fangarm sich in eine das Wegschwenken des Flügels (376) weg von der Wandung ermöglichende Stellung bewegt, der Ausstoßarm den zugeordneten Flügel von der Wandung wegtreibt, damit die zusammengefügten Elemente getrennt werden können.

**Revendications**

1. Mécanisme de libération (20, 120, 170, 200, 300, 370, 410) destiné à relier de façon libérale deux objets (90, 46, 144, 158, 210, 218, 414, 428) tels que des sangles, des cordes, des câbles, des tubes, des tuyaux, des barres, des colonnes ou analogues, comprenant:

a) un premier élément pivotant longitudinal rigide (24, 122, 172, 274, 374, 380, 412) relié par sa seconde extrémité au premier desdits objets et pouvant pivoter autour de ladite seconde extrémité, autour d'un premier axe perpendiculaire à la ligne reliant les deux objets,

b) un second élément pivotant, longitudinal, rigide (26, 124, 74, 240, 340) relié par sa seconde extrémité au même desdits objets et pouvant être placé dans une disposition sensiblement parallèle et en opposition au premier élément pivotant, et pouvant pivoter autour de ladite seconde extrémité, autour d'un second axe perpendiculaire à ladite ligne de liaison,

c) lesdits premier et second éléments pivotants ayant des bords de pivotement (28, 30, 132, 134, 176, 178, 340) à leurs premières extrémités perpendiculaires à ladite ligne de liaison,

d) lesdits premier et second éléments pivotants étant tournés ou repliés vers l'arrière afin que leurs premières extrémités soient dirigées vers ledit premier desdits objets lorsque le mécanisme de libération est dans sa position fermée,

e) un ensemble de base entre les premier et second éléments pivotants lorsqu'ils sont dans leur disposition sensiblement parallèle, leurs premières extrémités étant enclenchées avec l'ensemble de base, ledit ensemble de base ayant au moins une partie adjacente aux premières extrémités des éléments pivotants et ayant au moins deux parties d'enclenchement destinées à supporter les premières extrémités des deux éléments pivotants lorsqu'ils sont repliés en arrière dans une disposition sensiblement parallèle, l'autre desdits deux objets à réunir etant relié à l'élément de base, pour transmettre des forces de traction avec le mécanisme de libération,

f) des moyens d'assujettissement destinés à assujettir de façon libérale les premier et second éléments pivotants dans leur disposition sensiblement parallèle, et

g) des moyens de libération destinés à fixer de façon libérable lesdits moyens d'assujettissement dans la position d'assujettissement et pouvant être amenés dans une position de libération afin que, à la suite de la libération des moyens de libération, les premier et second éléments pivotants puissent pivoter et se dégager de l'ensemble de base pour permettre la séparation des objets réunis sous traction,

caractérisé en ce que ledit ensemble de base comprend un élément de base rigide (56, 136, 180, 324, 374, 430) ayant au moins deux sections de surface d'enclenchement (78, 80, 140, 182, 184, 330, 382, 436, 434) s'étendant transversalement à l'axe longitudinal dudit élément de base pour supporter de façon pivotante les premières extrémités desdits premier et second éléments pivotants (24, 26, 122, 124, 172, 174, 234, 240, 334, 380, 412), lesdites sections de surface d'enclenchement étant prévues sur des côtés opposés de l'autre desdits objets à réunir, et en ce que les moyens d'assujettissement (86, 92, 104, 106, 108, 154, 200, 202, 214, 216, 232, 384, 446) coopèrent directement avec lesfits éléments pivotants ou avec des éléments qui sont reliés directement aux éléments pivotants.

2. Mécanisme de libération selon la revendication 1, caractérisé en ce que l'élément de base rigide (324, 374) comprend plusieurs côtés plats et une surface frontale (328) destinée à buter contre l'autre objet ou un élément relié audit autre objet (314, 372), en ce que l'élément de base comporte plusieurs saillies (332, 382) s'étendant chacune vers l'extérieur à partie d'un côté plat et portant lesdits sections de surface d'enclenchement (330) pour les premières extrémités (340) des éléments pivotants (334, 380), et en ce que plusieurs lames rigides (306, 308, 310, 312, 370) sont reliées de façon pivotante à l'autre objet ou un élément relié audit autre objet (314, 372), chaque lame présentant un évidement (336) destiné à recevoir de façon pivotante ledit élément pivotant (334, 380) de manière que, lorsque les lames sont tournées pour s'enclencher avec les côtés plats de l'élément de base, les extrémités (340) des éléments pivotants s'enclenchant avec les sections de surface d'enclenchement (330), les deux objets à réunir ne puissent pas se séparer.

3. Mécanisme de libération selon la revendication 1, caractérisé en ce que l'élément de base (430) comprend une plaque transversale ayant une liaison centrale (432) pour l'un (428) des objets à réunir, des sections de surface (436, 434) définissant deux gorges espacées de chaque côté de la liaison centrale pour recevoir les premières extrémités des élément pivotants (412), et en ce que des gorges (438, 440, 444), ouvertes vers l'extérieur, sont prévues dans le bord périphérique dudit élément de base (430), l'autre objet (414) étant assujetti à une extrémité bifurquée au moyen de lignes flexibles (416, 418); et en ce que des moyens (442) sont prévus pour retenir de façon élastique les lignes dans les gorges (438, 440) aux extrémités opposées de l'élément de base (430).

4. Mécanisme de libération selon la revendication 1, caractérisé en ce que les sections de surface (78, 80; 140) de l'élément de base sont sensiblement planes (56, 136), et en ce que, optionnellement, les bords de pivotement (28, 30) des éléments pivotants (24, 26) ont une courbure convexe.

5. Mécanisme de libération selon la revendication 1, caractérisé en ce que les éléments pivotants (24, 26, 122, 124) comportent des languettes en saillie (52, 54, 128, 130) le long de leurs bords de pivotement (28, 30, 132, 134) et en ce que les sections de surface (78, 80; 140) définissent des fentes (82, 84; 146, 148) destinées à s'enclencher par emboîtement avec les languettes afin d'aligner les éléments pivotants par rapport à la base pour indexer les sections de surface et les bords de pivotement afin d'empêcher un mouvement transversal pendant l'enclenchement mutuel.

6. Mécanisme de libération selon les revendications 1 et 5, caractérisé en ce que les bords de pivotement des éléments pivotants définissent des fentes et en ce que les sections de surface comportent des saillies qui sont reçues et s'enclenchent dans les fentes des éléments pivotants.

7. Mécanisme de libération selon la revendication 4, caractérisé en ce que les éléments pivotants (24, 26) comprennent des plaques ayant chacune une barre transversale (58, 60) espacée de leurs bords de pivotement (28, 30) afin de former des liaisons pour sangles destinées à une extrémité de sangle ou de corde bifurquée.

8. Mécanisme de libération selon la revendication 7, caractérisé en ce que les éléments pivotants (24, 26) présentent des rainures extérieures (44) pour les extrémités de sangle.

9. Mécanisme de libération selon la revendication 8, caracatérisé en ce que l'élément de base (56) présente des rainures extérieures (74) pour les extrémités de sangle.

10. Mécanisme de libération selon la revendication 7, caractérisé en ce que le premier objet comprend un tronçon de sangle (144) et en ce que les éléments pivotants (122, 124) comportent un corps qui présente des bords latéraux s'étendant l'un vers l'autre pour s'enclencher avec les bords latéraux correspondants de l'élément pivotant opposé et pour définir une rainure dans laquelle peut passer le tronçon de sangle (144) qui est relié à l'élément de base (136).

11. Mécanisme de libération selon la revendication 1, caractérisé en ce que l'élément de base (56) comprend deux pièces (62, 64) qui définissent une rainure (66) destinée à s'enclencher avec un tronçon de sangle (46) et le retenir captif, et en ce que l'élément de base (56) comprend en outre des moyens (72) destinés à assujettir entre elles les deux pièces (62) 64) qui passent à travers le tronçon de sangle (46) pour l'assujettir rigidement à l'élément de base (56).

12. Mécanisme de libération selon la revendication 10, caractérisé en ce que l'élément de base (136) comporte une saillie (142) s'étendant au-dessus des sections de surface d'enclenchement (140) et une fente traversant la saillie pour former une barre de liaison de sangle.

13. Mécanisme de libération selon la revendication 1, caractérisé en ce que les sections de surface (184, 182) de l'élément de base définissent des gorges concaves destinées à recevoir les bords allongés de pivotement des éléments pivotants (172, 174).

14. Mécanisme de libération selon les revendications 1 et 13, caractérisé en ce que l'élément de base (180) comporte des saillies (186) s'étendant en travers des gorges, et en ce que les bords de pivotement des éléments pivotants (172, 174) comprennent chacun une section qui définit une fente (190) destinée à s'enclencher avec les saillies.

15. Mécanisme de libération selon la revendication 7, caractérisé en ce que l'élément de base (56, 136) présente une extrémité en forme de coin et des parois latérales (68, 70) qui définissent des rainures de chaque côté de l'élément de base pour recevoir étroitement les extrémités de sangle de l'extrémité de sangle bifurquée.

16. Mécanisme de libération selon la revendication 1, caractérisé en ce qu'il est prévu des moyens (86) destinés à rappeler les éléments pivotants (24, 26) afin de les faire pivoter à l'écart l'un de l'autre et de les dégager de l'élément de base (56), par exemple des sangles en caoutchouc (86), et reliés aux éléments pivotants (24, 26) et aux extrémités de sangle (40, 42).

17. Mécanisme de libération selon la revendication 1, caractérisé en ce que les moyens d'assujettissement (200) comprennent un boîtier coulissant (202) qui reçoit étroitement les éléments pivotants lorsqu'ils sont dans leur position sensiblement parallèle d'enclenchement avec l'élément de base, et en ce que les moyens (216, 214) sont prévus pour empêcher un mouvement de glissement du boîtier (202) à partir de la position dans laquelle il empêche un mouvement de pivotement des éléments pivotants.

18. Mécanisme de libération selon la revendication 1, caractérisé en ce que les moyens d'assujettissement comprennent une pièce flexible de liaison reliée au premier élément pivotant (172) en opposition à sa première extrémité et présentant un trou dans son extrémité opposée, une pièce de liaison reliée au second élément pivotant (174), par un point opposé à sa première extrémité, et présentant une ouverture dans laquelle peut passer l'extrémité présentant le trou de la première pièce de liaison, et en ce que les moyens de libération comprennent un élément relativement rigide qui s'étend à travers le trou de la première pièce de liaison pour empêcher son retrait à travers l'ouverture et pour empêcher la séparation des éléments pivotants jusqu'à ce qu'elle soit retirée.

19. Mécanisme de libération selon la revendication 1, caractérisé en ce que les moyens d'assujettissement comprennent des pièces de liaison (86) reliées aux éléments pivotants (24, 26), par des points opposés à leurs premières extrémités, et présentant des ouvertures, en ce qu'une pièce (104) de liaison à extrémités doubles est prévue et présente des trous dans chaque extrémité pour passer dans les ouvertures, et en ce que deux éléments relativement rigides s'étendent à travers les trous des extrémités opposées des pièces de liaison.

20. Mécanisme de libération selon la revendication 1, caractérisé en ce que les moyens d'assujettissement comprennent un étrier (232) pouvant être assujetti latéralement autour des éléments pivotants (234, 240) et des moyens (242, 244, 246) destinés à assujettir entre elles de façon libérable les extrémités de l'étrier (232).

21. Mécanisme de libération selon la revendication 2, caractérisé en ce que les lames (306, 308, 370), entourent complètement l'élément de base (324, 374) et l'extrémité de l'élément de butée (214, 372) à réunir et comportent chacune des bords latéraux, optionnellement chanfréinés (320), qui butent contre les bords latéraux (320) des lames adjacentes afin d'empêcher les éléments réunis de tourner l'un par rapport à l'autre.

22. Mécanisme de libération selon la revendication 21, caractérisé en ce que l'élément de base (324) comporte quatre parois possédant chacune une saillie s'étendant à partir de cette paroi; en ce qu'il est prévu quatre lames (306, 308, 310, 312), chacune en contact avec l'une des parois; et en ce qu'il est prévu quatre éléments pivotants rigides (334) reliés chacun de façon pivotante à l'une des lames.

23. Mécanisme de libération selon les revendications 2, 21 et 22, caractérisé en ce que les parois présentent des surfaces définissant des trous (344) au-dessous des lames, en ce que les moyens d'assujettissement comportent des languettes (392) en saillie vers l'intérieur sur les lames, qui s'étendent à travers les trous (344), et en ce que des moyens sont prévus pour assujettir de façon libérable les languettes dans les trous.

24. Mécanisme de libération selon la revendication 23, caractérisé en ce que les languettes (342) en saillie présentent des surfaces définissant des encoches (352), en ce que deux doigts rappelés (352), faisant saillie dans des directions opposés, s'enclenchent dans les encoches (350) de la languette, et en ce que des moyens sont prévus pour dégager les doigts des encoches afin de libérer les lames et de permettre un désaccouplement des éléments réunis.

25. Mécanisme de libération selon la revendication 23, caractérisé en ce que les moyens d'assujettissement comprennent des moyens (356, 360) destinés à éjecter les languettes de leurs positions assujetties.

26. Mécanisme de libération selon la revendication 21, caractérisé en ce que les moyens d'assujettissement comprennent un bras (384) d'emprisonnement relié de façon pivotante à la paroi de l'élément de base, en ce que des moyens (390) sont prévus pour déplacer la bras d'emprisonnement d'une position assujettissant la lame associée (379) contre la paroi à une position permettant à la lame de s'éloigner en pivotant de la paroi pour permettre aux éléments réunis de se séparer.

27. Mécanisme de libération selon la revendication 26, caractérisé en ce qu'un dispositif (402) d'éjection de lame comprend un bras d'éjection pouvant être placé entre la lame et la paroi et relié aux moyens (390) de déplacement du bras d'emprisonnement afin de se déplacer avec eux pour que, lorsque le bras d'emprisonnement se déplace vers une position permettant à la lame (376) de s'éloigner en pivotant de la paroi, le bras d'éjection écarte à force la lame associée de la paroi pour permettre aux éléments réunis de se séparer.

# FIG. 1

# FIG. 2

FIG. 3

FIG. 4

FIG. 5

FIG. 6

EP 0 147 451 B1

FIG. 7

FIG. 8

FIG. 9

FIG. 10

FIG. 12

FIG. 11

EP 0 147 451 B1

320 322 318 316 308 320
306 322
310
318 316
316 318
300 316 318 312

FIG. 13

316 336 300 308 334 338
318
314 332
326 328
366 368
324
332
330
318 340
316
320
338 322
342
312

FIG. 14

312

FIG. 15

FIG. 16

FIG. 17

**FIG. 18**

**FIG. 19**